# EUROPÄISCHE PATENTSCHRIFT

(11) **EP 0 563 833 B1**
(45) Veröffentlichungstag und Bekanntmachung des Hinweises auf die Patenterteilung: **19.06.1996**
(21) Anmeldenummer: 93105101.5
(22) Anmeldetag: 27.03.1993
(51) Int. Cl.: A23L 1/164, A21D 13/02, A21D 2/26, A21D 6/00, A21D 8/02

(54) **Verfahren zum Herstellen eines Nahrungsmittels**
Process for the production of a food product
Procédé pour la production d'un produit alimentaire

(30) Priorität: 31.03.1992 DE 4210572
(43) Veröffentlichungstag der Anmeldung: 06.10.1993
(73) Patentinhaber: Baumgärtner, Eugen, D-67663 Kaiserslautern (DE)
(72) Erfinder: Baumgärtner, Eugen, D-67663 Kaiserslautern (DE)
(74) Vertreter: Bernhardt, Winfrid, Dr.-Ing.

(56) Entgegenhaltungen:
- EP-A- 0 105 787
- DE-A- 2 340 434
- US-A- 3 620 173
- PATENT ABSTRACTS OF JAPAN, Band 11, Nr. 332 (C-455), 29. Oktober 1987; & JP - A - 62118880 (NISSHIN FLOUR MILLING CO. LTD.) 30. 05.1987

## Beschreibung

Die Erfindung bezieht sich auf ein Verfahren zum Herstellen eines Nahrungsmittels aus pflanzlichem Fruchtmehl oder -schrot, insbesondere Weizenmehl oder -schrot.

Es liegt ihr die Aufgabe zugrunde, ein Nahrungsmittel mit einer neuen Nähr- und Wirkstoffzusammensetzung zu schaffen, die die gewöhnliche menschliche Ernährung vorteilhaft ergänzt.

Gemäß der Erfindung wird dieser Zweck in der Weise erfüllt, daß das pflanzliche Fruchtmehl oder -schrot, insbesondere Weizenmehl oder -schrot, in Wasser hitzebehandelt wird und das so erhaltene Erzeugnis unter Luftabschluß aufbewahrt wird, bis die dabei auftretende Gasbildung im wesentlichen abgeschlossen ist.

Nach dieser Verfahrensweise entsteht auf natürlichem Wege durch unter dem Luftabschluß ablaufende microbielle Prozesse ein Aufbereitungsprodukt, in dem das bei der Verdauung nur schwer aufschließbare und nur schwer verwertbare pflanzliche Fruchtmehl immerhin mindestens zu einem Teil in besser verwertbare energiereichere Eiweiße umgewandelt ist und darüber hinaus weitere Nähr- und Wirkstoffe zur Verfügung gestellt werden, die in dem Fruchtmehl oder -schrot nicht oder nicht dieser Menge vorhanden waren, insbesondere Amino- und andere organische Säuren, Vitamine, Hormone, Fermente, Enzyme, Antibiotika und lebende Microorganismen und/oder deren Dauerformen.

Das Nahrungsmittel ist bei Raumtemperatur jahrelang haltbar.
Es enthält mit den bei der Fermentation entstehenden organischen Säuren Konservierungsmittel. Sein pH-Wert liegt in der Regel bei 2,8 bis 3,2.
Das Nahrungsmittel ist geeignet, in kleinen Mengen als Ergänzungsnahrung aufgenommen zu werden.
In der nach der Aufbewahrung unter Luftabschluß vorliegenden flüssigen Form genügen beispielsweise Gaben von je 20-40 ml morgens und abends - am besten gekühlt.
Es ist aber auch möglich, den Bodensatz der Flüssigkeit abzutrennen, zu trocknen und zu pulverisieren und das Pulver als Darreichungsform vorzusehen.
Das Pulver kann ferner zu Schluck-Tabletten weiterverarbeitet werden.
Im übrigen kann das Nahrungsmittel als Ausgangsprodukt zur Gewinnung einzelner seiner Bestandteile oder von Konzentraten dienen.

Patent Abstracts of Japan, Bd 11, Nr. 332 (C-455), 29.Okt. 1987; & JP-A-62 118 880 (NISSHIN FLOUR MILLING CO. LTD.) 30.05.1987 * Zusammenfassung * beschreibt ein Verfahren zur Herstellung von Granulat mit Weizenmehl, bei dem die Stärke in die α-Form umgewandelt ist.

US-A-3 620 173 beschreibt eine fermentierbare Mehl-Wasser-Mischung unter Druck, des höher liegt als des Atmosphärendruck zu fermentieren und zu Teig weiter zu verarbeiten.

Wesentlicher Vorteil des nach der Erfindung hergestellten Nahrungsmittels ist sein Beitrag zu einer ausgewogenen Ernährung. Es steuert Nähr- und Wirkstoffe bei, die es vor allem auch zu einem heilungsfördernden Kräftigungsmittel bei Krankheiten machen in einem Maße, daß der Krankheitsverlauf erstaunlich gemildert werden kann. Besonders vorteilhaft ist ferner die mit hohem Wirkungsgrad energie- und zeitsparend und im übrigen umweltfreundlich stattfindende Umwandlung von Kohlehydrat in energiereicheres, ernährungsphysiologisch besser verwertbares Eiweiß; die Umwandlung von Kohlehydraten in Eiweiß geht üblicherweise über den Weg der Tierhaltung.

Außer Weizen kommen auch andere Getreide sowie Soja, Hirse, Reis, Mais und Kartoffeln näher in Betracht.

Die Aufbewahrung unter Luftabschluß sollte in Zeitabständen mit Druckentspannungen verbunden sein, und zwar zweckmäßigerweise immer dann, wenn der Druck etwa 80 bis 120 k P (0,8 bis 1,2 atü), vorzugsweise um 100 k P (1 atü), erreicht hat.

Die Entspannung sollte kurz und schlagartig vorgenommen werden.
Dann lockert sich dabei der Bodensatz auf und erwird umgewälzt.
Im übrigen verhindert die nur kurze, plötzliche Entspannung Lufteintritt.
Die Aufbewahrung erfolgt besser im Dunkeln. Erfahrungsgemäß laufen die erwünschten Prozesse dann sicherer ab.

Schließlich wird vorgeschlagen, möglichst ein frisch gemahlenes Mehl zu verwenden, vorzugsweise auch aus frischem Getreide. Das frische Mehl zeigt sich reaktionsbereiter und führt zu einem zu bevorzugenden Produkt, das sich mit einem vergleichsweise klaren Bodensatz auch schon im Aussehen hervorhebt.
Es sei klargestellt: Das erfindungsgemäß hergestellte Nahrungsmittel ist nicht zur Weiterverarbeitung zu einer Speise bestimmt und vor allem nicht in Verbindung mit einer Wärmebehandlung, wie Kochen oder Backen.
Es soll unmittelbar eingenommen werden.

### Beispiel einer einfachen Herstellung:

1 kg Weizenmehl Typ 405 werden mit 2 l Wasser angerührt und dann mit 18 l kochendem Wasser übergossen. Die entstehende gelartige Flüssigkeit wird in einen Kunststoff-Kanister gefüllt; dieser wird dicht verschlossen. Nach 2 Tagen ist der Kanister infolge Gasentwicklung stark ausgebaucht. Durch kurzes Lockern des Verschlusses wird der Überdruck abgelassen. Das wird etwa 14 Tage lang morgens und abends wiederholt. Dann läßt die Gasentwicklung nach. Spätestens nach 4 Wochen ist sie abgeschlossen.

### Beispiel einer industriellen Herstellung:

Weizenmehl rieselt aus einem Silo in einen von einem Druckluftgebläse erzeugten und mittels Heizschlangen auf ca. 140° C erhitzten Luftstrom. Das Gemisch wird über eine Zerstäuberdüse in einen Reaktionsbehälter expandiert. Im Gegenstrom am Reaktionsbehälter entlanggeleitetes und dabei auf ca. 40° C vorgewärmtes Wasser wird im Verhältnis 1 t Mehl : 20 m³ Wasser ebenfalls durch eine Düse so in den Behälter gesprüht, so daß sich ein Mehl-Wasser-Gemisch bildet. Das in dem Reaktionsbehälter weiter hitzebehandelte Mehl-Wasser-Gemisch scheidet sich entlang des Temperaturgefälles im Reaktionsbehälter als gelartige Flüssigkeit ab. Es wird zur weiteren Reifung in Lagerbehälter abgeleitet.
Das so erhaltene Erzeugnis wird im wesentlichen unter Luftabschluß aufbewahrt, bis die dabei auftretende Gasbildung im wesentlichen abgeschlossen ist. Nach 2 Tagen hat sich infolge der Gasentwicklung ein Überdruck aufgebaut. Dieser Überdruck wird während der nächsten 14 Tage etwa alle 12 Stunden schlagartig abgelassen, um den weiteren Aufschluß des pflanzlichen Fruchtmehls zu bewirken. Die Behälter sind mit einem auf einen Höchstdruck von etwa 1 atü eingestellten Überdruckventil versehen.

Nach etwa 14 Tagen ist ein pH-Wert von ca. 2,8 bis 3,2 erreicht und die Gasentwicklung läßt nach. Spätestens nach 4 Wochen ist sie abgeschlossen.

Das Erzeugnis hat den Charakter einer säuerlichen Milch.

## Patentansprüche

1. Verfahren zum Herstellen eines Nahrungsmittels aus pflanzlichem Fruchtmehl oder -schrot, insbesondere Weizenmehl oder -schrot,
dadurch gekennzeichnet,
daß das Fruchtmehl oder -schrot in Wasser hitzebehandelt wird und das so erhaltene Erzeugnis unter Luftabschluß aufbewahrt wird, bis die dabei auftretende Gasbildung im wesentlichen abgeschlossen ist.

2. Verfahren nach Anspruch 1,
dadurch gekennzeichnet,
daß 40 bis 60 g Fruchtmehl oder -schrot auf 1 l Wasser verwendet werden.

3. Verfahren nach Anspruch 1 oder 2,
dadurch gekennzeichnet,
daß die genannte Aufbewahrung in einem druckdicht verschlossenen Gefäß erfolgt, das in Zeitabständen entspannt wird.

4. Verfahren nach Anspruch 3,
dadurch gekennzeichnet,
daß die Entspannung vorgenommen wird, wenn der Druck 80 bis 120 k P, vorzugsweise etwa 100 k P erreicht hat.

5. Verfahren nach Anspruch 3 oder 4,
dadurch gekennzeichnet,
daß die Entspannung schlagartig vorgenommen wird.

6. Verfahren nach einem der Ansprüche 1 bis 5,
dadurch gekennzeichnet,
daß die Aufbewahrung in Dunkelheit erfolgt.

7. Verfahren nach einem der Ansprüche 1 bis 6,
dadurch gekennzeichnet,
daß frisch gemahlenes Fruchtmehl oder -schrot verwendet wird.

8. Verfahren nach einem der Ansprüche 1 bis 7,
dadurch gekennzeichnet,
daß nach der Aufbewahrung unter Luftabschluß der Bodensatz des Erzeugnisses abgetrennt, getrocknet und pulverisiert wird.

9. Verfahren nach Anspruch 8,
dadurch gekennzeichnet,
daß das Pulver zu Tabletten verarbeitet wird.

10. Verwendung eines nach einem der Ansprüche 1 bis 9 hergestellten Nahrungsmittels durch unmittelbare Einnahme.

## Claims

1. A process for the production of a food product of vegetable fruit flour or grist, particularly wheat flour or grist,
characterised in that
the fruit flour or grist is heat treated in water and the product thereby obtained is stored under airtight seal until the gas formation occurring therein has mostly ended.

2. The process according to claim 1,
characterised in that
40 to 60 grams of fruit flour or grist are used per 1 litre of water.

3. The process according to claim 1 or 2,
characterised in that
the given storage takes place in a pressure-proof sealed vessel that is periodically relieved of pressure.

4. The process according to claim 3,
characterised in that the relieving (of pressure) is untertaken when the pressure has reached 80 to 120 k P, preferably approximately 100 k P.

5. The process according to claim 3 or 4,
characterised in that
the pressure relief is instantaneous.

6. The process according to one of claims 1 to 5,
characterised in that
the storage takes place in darkness.

7. The process according to one of claims 1 to 6,
characterised in that
freshly ground fruit flour or grist is used.

8. The process according to one of claims 1 to 7,
characterised in that after the storage under airtight seal the sediment of the product is separated, dried and pulverised.

9. The process according to claim 8,
characterised in that
the powder is made into tablets.

10. Use of a food product produced according to one of claims 1 to 9, by direct ingestion thereof.

## Revendications

1. Procédé pour la fabrication d'un produit alimentaire à base de farine végétale de fruits ou de gruau végétal de fruits, en particulier de farine ou de gruau de froment, caractérisé en ce que la farine ou le gruau de fruits est traité thermiquement dans de l'eau et en ce que le produit ainsi obtenu est stocké à l'abri de l'air jusqu'à ce que le dégagement gazeux qui se produit soit essentiellement terminé.

2. Procédé selon la revendication 1, caractérisé en ce qu'on utilise 40 à 60 g de farine ou de gruau de fruits pour 1 l d'eau.

3. Procédé selon la revendication 1 ou 2, caractérisé en ce que le stockage mentionné est réalisé dans un récipient fermé hermétiquement qui est dépressurisé par intermittence.

4. Procédé selon la revendication 3, caractérisé en ce que la dépressurisation est réalisée lorsque la pression atteinte 80 à 120 kP, de préférence environ 100 kP.

5. Procédé selon la revendication 3 ou 4, caractérisé en ce que la dépressurisation est réalisée brusquement.

6. Procédé selon une quelconque des revendications 1 à 5, caractérisé en ce que le stockage est réalisé dans l'obscurité.

7. Procédé selon une quelconque des revendications 1 à 6, caractérisé en ce qu'on utilise de la farine ou du gruau de fruits fraîchement moulus.

8. Procédé selon une quelconque des revendications 1 à 7, caractérisé en ce qu'après stockage à l'abri de l'air, on sépare le dépôt du produit obtenu et en ce qu'on le sèche et le pulvérise.

9. Procédé selon la revendication 8, caractérisé en ce qu'on transforme la poudre en comprimés.

10. Utilisation d'un produit alimentaire fabriqué selon une quelconque des revendications 1 à 9 par ingestion du produit tel quel.
